# EUROPEAN PATENT APPLICATION

(11) **EP 4 732 911 A1**
(43) Date of publication of application: **29.04.2026**
(21) Application number: 24825379.1
(22) Date of filing: 18.06.2024
(51) Int. Cl.: A62C 3/02, A62C 31/00, B64D 1/16

(54) **FIRE-FIGHTING EQUIPMENT**

(30) Priority: 23.06.2023 ES 202331123 U
(71) Applicant: Barrigón Lafita, Jorge, 08304 Mataró Barcelona (ES)
(72) Inventor: Barrigón Lafita, Jorge, 08304 Mataró Barcelona (ES)
(74) Representative: Balder IP Law, S.L.
(86) International application number: PCT/ES2024/070378
(87) International publication number: WO 2024/261364

(57) **Abstract**

The invention relates to firefighting equipment (1) comprising a support structure (2) provided with a frame (21) and a container (5) for extinguishing fluid, a motor-pump unit (3) to provide energy to the fluid, and a nozzle (4) coupled to the motor-pump unit (3) supported by the frame (21), characterized in that the structure comprises support legs (22), anchoring means (71) for slings (7) and in that the nozzle (4) is oriented according to a substantially vertical direction (DV).

## Description

### TECHNICAL FIELD

The invention focuses on the field of helicopter firefighting equipment of the type comprising means for propelling an extinguishing fluid or a non-heat-transmitting fluid and for directing same towards fire or creating a firebreak.

### BACKGROUND

Fire extinguishing equipment is known to comprise a support structure for a container for extinguishing fluid (water, retardant), a motor-pump unit to provide energy to the fluid, and a nozzle coupled to the motor-pump unit.

Such equipment is generally mounted on wheeled vehicles in order to bring it as close as possible to the flames to be extinguished.

Products specially designed for extinguishing fire, particularly a flame-retardant composition which can be ionized prior to its expulsion, so that it acquires a negative charge which improves its capacity to diffuse over the forest mass, are also known, for example, from patent publication ES2556912B2.

One drawback when adapting this equipment to aircraft is that the adaptation for each type of equipment must be certified by civil aviation (EASA), which is a long and expensive process.

### DESCRIPTION OF THE INVENTION

To overcome the shortcomings of the state of the art, the present invention proposes firefighting equipment, comprising a support structure provided with a frame and a container for extinguishing fluid, a motor-pump unit to provide energy to the fluid, and a nozzle coupled to the motor-pump unit supported by the frame, wherein the structure comprises support legs, anchoring means for slings, and in that the nozzle is oriented according to a substantially vertical direction.

This equipment overcomes the drawbacks of the state of the art since it is an autonomous structure that can be hung from any aircraft prepared to transport cargo. In other words, when transported by a helicopter by means of a sling, it is considered an external load (such as a cement pallet, light poles, etc.) and therefore does not require authorizations by EASA (European Union Aviation Safety Agency), requiring a minor authorization through a DOA (Design Organization Approval by EASA) for the equipment control system with the pilot. This makes the equipment highly versatile in terms of interchangeability between helicopter models.

Another significant contribution of the invention is that with the orientation and the large capacity (volume in cubic meters per second), as well as the high speed of air from the turbine and the nozzle thereof, great impregnation distances of the forest mass or of the fire to be put out are reached, achieving product nebulization and ionization that provides total coverage of the forest mass, both for firefighting purposes and for the preventive use thereof as a firebreak.

Another advantage of the equipment is the fact that, by means of minimal modifications, it can be adapted to be fixed to a wheeled vehicle.

In some embodiments, the equipment comprises an ionizer coupled to the outlet of the nozzle and electric energy supply means. By means of using an ionizer, it is ensured that the extinguishing fluid uniformly covers every corner, guaranteeing that fire is extinguished in an optimal manner.

In some embodiments of the equipment, the electric energy supply means consist of a battery and/or a generator.

In some embodiments of the equipment, the motor-pump unit comprises a motor, an air turbine having a high volumetric capacity per second and high air speed, and a pump for driving extinguishing fluid.

In some embodiments of the equipment, the support structure comprises a vertical stabilizing fin, so as to minimize or prevent uncontrolled rotation of the equipment, provide flight stability, and offer better spray control.

Preferably, the firefighting equipment comprises an electronic control and communication unit.

Preferably, the support structure is made of aluminum.

In some embodiments of the equipment, image acquisition means oriented downwards are envisaged.

The invention also relates to an aircraft provided with firefighting equipment according to any of the preceding variants and attachment sling(s) between the firefighting equipment and the aircraft.

Finally, and very advantageously, the aircraft is a helicopter.

### BRIEF DESCRIPTION OF THE FIGURES

To complete the description and in order to provide for a better understanding of the invention, a set of drawings is provided. Said drawings are an integral part of the description and illustrate embodiments of the invention, which must not be interpreted as a limitation of the scope of the invention, but simply as an example of how the invention can be carried out. The drawings comprise the following figures:
Figure 1 is an elevational view of the equipment according to the invention according to the direction of the axis of the turbine.
Figure 2 is an elevational view of the equipment of the invention according to a direction perpendicular to the axis of the turbine.
Figure 3 is a plan view of the equipment.
Figure 4 is an elevational view of the inventive assembly consisting of a helicopter and the firefighting equipment according to the invention.

### DESCRIPTION OF PREFERRED EMBODIMENTS

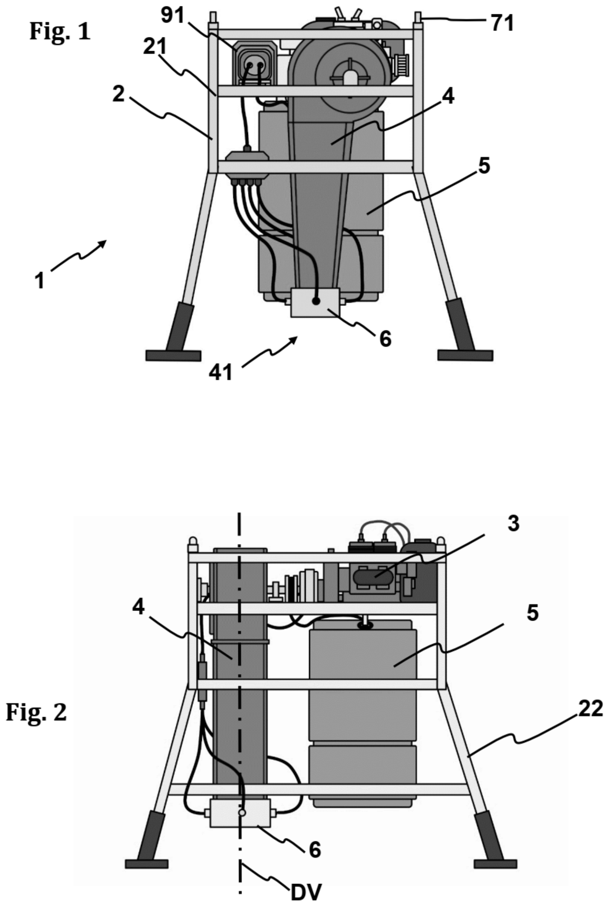

As can be seen in Figures 1 to 3, the invention relates to firefighting equipment 1 comprising a support structure 2. This support structure is preferably made of aluminum and is made up of profiles arranged as a frame 21 from support legs 22 extend. The upper part of the frame is provided with rings 71 intended for the coupling of hooks for slings 7.

The frame 2 supports a container 5 for extinguishing fluid, a motor-pump unit 3 to provide energy to the fluid, and a nozzle 4 coupled to the motor-pump unit 3 supported by the frame 21.

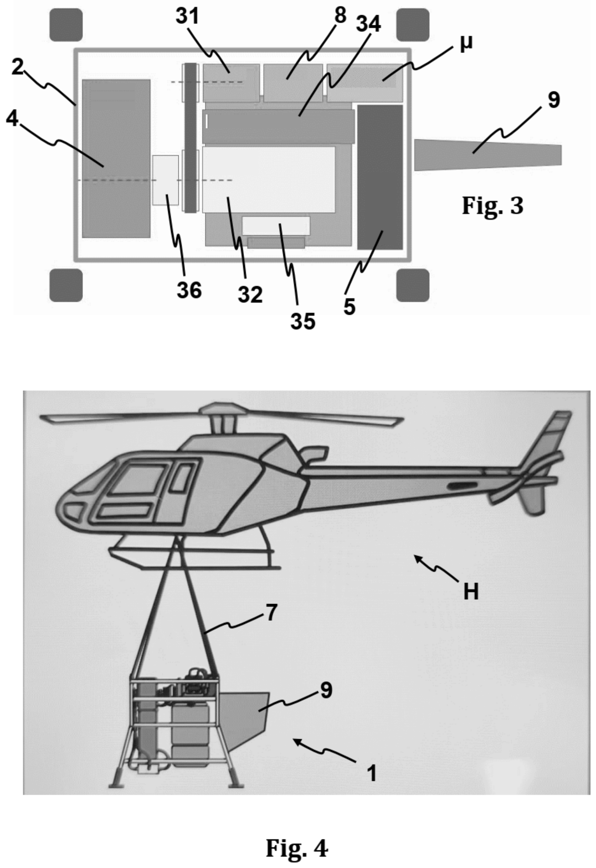

According to the invention, the nozzle 4 is oriented according to a substantially vertical direction DV. In this way, its availability and ease of use are optimal. As can be seen in Figure 4, it is sufficient to attach it by means of slings to a helicopter H, carry it over the burning forest mass, and spray directly.

As can be seen in Figures 1 and 2, the firefighting equipment 1 comprises an ionizer 6 coupled to the outlet 41 of the nozzle 4 and electric energy supply means 91. This ionizer is designed to operate with extinguishing fluids such as the one disclosed in the patent mentioned in the background, and allows ensuring that the fluid reaches every corner.

The electric energy supply means are a battery 8 and/or a generator and are arranged in the preferred embodiment between the control electronics and the pump 31, in the upper part of the equipment.

The motor-pump unit 3 comprises a motor 32 and a pump 31 for driving extinguishing fluid with power adapted to nebulize the extinguishing fluid.

Very preferably, the support structure 2 comprises a vertical stabilizing fin 9 which increases the stability of the equipment by preventing undesired rotations of the equipment and minimizing flight interference.

As can be seen in Figure 3, at the corner opposite where the turbine is arranged, there is arranged an electronic control and communication unit µ, intended for the remote control of the components, including the control of any image capture means mounted on-board the equipment.

As illustrated in Figure 4, the equipment is designed to be carried by a helicopter, for which attachment slings between the firefighting equipment 1 and the aircraft H are envisaged. In this case, equipment release means which can be actuated by the pilot in the event of an emergency are envisaged.

### Legends of Figure 3:

4: turbine
5: container
8: battery
9: vertical stabilizing fin;
31: pump
32: motor
33: transmission belt
34: exhaust system
35: carburetors
36: clutch
µ: electronic control and communication unit

In this text, the term "comprises" and its derivations (such as "comprises", etc.) should not be understood in an excluding sense, that is, these terms should not be interpreted as excluding the possibility that what is described and defined may include other elements.

Obviously, the invention is not limited to the specific embodiments described herein, but also encompasses any variations that may be, by any person skilled in the art, considered to be within the general scope of the invention as defined in the claims.

## Claims

1. Firefighting equipment (1) comprising a support structure (2) provided with a frame (21) and a container (5) for extinguishing fluid, a motor-pump unit (3) to provide energy to the fluid, and a nozzle (4) coupled to the motor-pump unit (3) supported by the frame (21), **characterized in that** the structure comprises support legs (22), anchoring means (71) for slings (7) and **in that** the nozzle (4) is oriented according to a substantially vertical direction (DV).

2. Firefighting equipment (1) according to claim 1, comprising an ionizer (6) coupled to the outlet (41) of the nozzle (4) and electric energy supply means (91).

3. Firefighting equipment (1) according to claim 2, wherein the electric energy supply means (91) are a battery and/or a generator.

4. Firefighting equipment (1) according to any of the preceding claims, wherein the motor-pump unit (3) comprises a motor (32) and a pump (31) for driving extinguishing fluid.

5. Firefighting equipment (1) according to any of the preceding claims, wherein the support structure (2) comprises a vertical stabilizing fin (9).

6. Firefighting equipment (1) according to any of the preceding claims, comprising an electronic control and communication unit (µ).

7. Firefighting equipment (1) according to any of the preceding claims, wherein the support structure (2) is made of aluminum.

8. Firefighting equipment (1) according to any of the preceding claims, comprising image acquisition means oriented downwards.

9. An aircraft (H) comprising firefighting equipment (1) according to any of the preceding claims and an attachment sling or slings between the firefighting equipment (1) and the aircraft (H).

10. The aircraft according to claim 9, which is a helicopter (H).

11. The aircraft according to claim 10, comprising equipment release means which can be actuated by the pilot in the event of an emergency.
